# EUROPÄISCHE PATENTANMELDUNG

(11) **EP 1 477 874 A2**
(43) Veröffentlichungstag der Anmeldung: **17.11.2004**
(21) Anmeldenummer: 04006676.3
(22) Anmeldetag: 19.03.2004
(51) Int. Cl.: G05D 23/02, G05D 23/19

(54) **Ventil mit elektromotorischem Antrieb für fluidbetriebene Heiz- und Kühlsysteme**

(30) Priorität: 19.03.2003 DE 20304439 U
(71) Anmelder: Aue, Bernd, 30453 Hannover (DE); Körner, Hans-Holger, 23758 Oldenburg in Holstein (DE)
(72) Erfinder: Aue, Bernd, 30453 Hannover (DE); Körner, Hans-Holger, 23758 Oldenburg in Holstein (DE)
(74) Vertreter: Siekmann, Gunnar, Dipl.-Phys.

(57) **Zusammenfassung**

Ein Ventil (1) mit einem demontierbaren elektronisch gesteuerten elektromotorischem Antrieb (9) für fluidbetriebene Heiz- und Kühlkörper, das bei abgenommenem Antriebsteil mit einem Handbetätigungsrad (7) oder manuell einstellbar ist, auf das bei aufgesetztem Antriebsteil (9) der Antrieb wirkt, wird das Ventil (1) als Drehschieberventil mit durch Anschläge definierten Stellungen völliger Öffnung und völliger Schließung ausgebildet und weist der Antrieb einen Schrittmotor (13) auf und die Steuerung eines Meßeinrichtung für den Motorstrom auf. Dadurch ist das Ventil einfacher aufgebaut und es ist eine bessere Steuerung/Regelung der Temperatur möglich.

## Beschreibung

Die Erfindung betrifft ein Ventil mit einem demontierbaren elektronisch gesteuerten elektromotorischen Antrieb für fluidbetriebene Heiz- und Kühlsysteme, das bei abgenommenen Antriebsteil mit einem Handbetätigungsrad oder manuell einstellbar ist, auf das bei aufgesetzten Antriebsteil der Antrieb wirkt.

Solche Ventile, insbesondere Heizkörperventile sind zur Energieeinsparung seit längerer Zeit nicht mehr als einfache Handventile ausgebildet, sondem werden entsprechend der Raumtemperatur geregelt. Dies geschieht bei den üblichen Heizkörperventilen dadurch, daß sich ein Element bei Erwärmung des Kühlfluids durch Kühlkörper, z.B. Kühldecken zur Raumkühlung vorgesehen werden.

Diese bekannten Thermostatventile haben verschiedene Nachteile. Der Hub des Ventiltellers, der gegen den Ventilsitz gedrückt wird, ist verhältnismäßig gering und beträgt bei üblichen Ventilen maximal zwei Millimeter. Schon dies macht eine Regelung der Temperatur schwierig. Für unterschiedliche Durchflussmengen, z. B. für unterschiedliche große Heizkörper, müssen auch unterschiedlich große Ventile verwendet werden, was erhöhte Lagerkosten und Probleme bei der Installation mit sich bringt. Auch die Verwendung von verstellbaren Lochkulissen mit unterschiedlich großen Öffnungen, die bei der Montage eingestellt werden müssen, ist sehr aufwendig. Soll die Heizungsanlage nach Installation derselben oder zu Testzwecken "abgedrückt" werden, müssen die Heizkörperventile bei vielen Prüfverfahren geschlossen werden. Dies geschieht dadurch, daß man den Temperaturreglerteil entfernt und statt dessen eine Kunststoffkappe auf das Ventil aufschraubt, das den Ventilstößel hineindrückt. Einerseits kann so nicht sichergestellt werden, daß das Ventil wirklich geschlossen wird, wenn sich der Ventilstößel aufgrund der Federkraft, die ihn herauszudrücken bestrebt ist, in den Kunststoff hineindrückt. Dieses Hineindrücken in den Kunststoff kann auch durch den höheren Druck erfolgen, der beim "Abdrücken" auf die Heizungsleitungen gegeben wird. Wird dann anschließend oder nach Reparaturen der Regelteil wieder aufgeschraubt, so muß der Gegendruck der Ventilfeder ebenfalls überwunden werden. Bei der Montage der Überwurfmutter muß daher das richtige Drehmoment verwendet werden, um eine einwandfrei Funktion mit richtiger Skalierung bzw. Nullpunktsetzung zu erreichen. Dieses kann für Nicht-Fachleute eine Hemmschwelle sein, bzw. nicht immer gewährleistet werden, so daß Funktionsstörungen auftreten können. Schließlich sind die Regelungsmöglichkeiten dieser Ventile sehr begrenzt.

Um hier eine Verbesserung zu schaffen, ist es bekannt, statt der Steuerung bzw. Regelung durch Dehnungskörper einen elektromotorischen Antrieb zu verwenden, durch den der Ventilstößel kontrolliert mehr oder weniger weit in das Ventil hinein gedrückt werden kann (DE 197 06 736 C1, DE 39 00 866 C2). Diese Betätigungsvorrichtung ist aber verhältnismäßig kompliziert aufgebaut. Die Regelung ist auch schwierig, da ebenfalls mit sehr kleinen Wegen des Ventilstößels bzw. -tellers gearbeitet werden muß und die geschlossene Stellung aufgrund von Erwärmung des Ventils und wegen der Elastizität und Alterung der Gummidichtung nicht genau definiert ist und sich im Laufe der Zeit ändern kann. Diese Probleme können auch nicht dadurch gelöst werden, daß ein scheibenförmiges Bauelement mit Markierungen zur Erfassung des Drehwinkels des Antriebs verwendet wird (DE 39 00 866 C2). Obwohl bei der bekannten Betätigungsvorrichtung mit Hilfe der ebenfalls vorgesehenen elektronischen Steuerung eine vielfältige Art der Regelung und Steuerung mit Bedienelementen in Form einer Tastatur und einer LCD-Anzeige, mit Wochen- und Tagesprogrammen, Menüsteuerung, Fernfühlern, Netzteilen, Kommunikationsschnittstellen usw. unter Mitwirkung eines Mikroprozessors möglich ist, ist die Betätigungsvorrichtung immer noch nachteilig. Es muß verhältnismäßig viel Kraft bzw. Drehmoment aufgewendet werden, um den Ventilstößel gegen den starken Druck seiner Feder hineinzudrücken, so daß bei Batteriebetrieb dieselbe schnell erschöpft ist. Das Drehmoment das zum Öffnen aufgewandt werden muß, ist demgegenüber viel kleiner. Es besteht weiter wie bei den Eingangs genannten Thermostatventilen das Problem darin, daß die Betätigungseinrichtung gegen den Druck der Ventilfeder mit vorbestimmten Drehmoment aufgeschraubt werden muß, da sonst die Regelung nicht einwandfrei funktionieren kann, die ohnehin wegen der ungenauen Definition der Schließstellung problematisch ist. wie auch bei Thermostat ventilen tritt im übrigen häufig bei fast geschlossenem Ventil ein erhebliches Pfeifen auf, was natürlich störend ist.

Die Aufgabe der Erfindung besteht in der Schaffung eines Ventils, das einfacher aufgebaut ist und eine bessere Steuerung/Regelung der Temperatur ermöglicht.

Die erfindungsgemäße Lösung besteht darin, daß das Ventil als Drehschieberventil mit durch Anschläge definierten Stellungen völliger Öffnung und völliger Schließung ausgebildet ist, der Antrieb einen Schrittmotor aufweist und die Steuerung eine Meßeinrichtung für den Motorstrom aufweist.

Es wird also erfindungsgemäß statt des bekannten Ventils mit einem Ventilstößel ein Drehschieberventil verwendet. Dieses erfordert zur Betätigung eine wesentlich geringere Kraft als ein Ventil mit Ventilstößel und Feder, wobei diese Kraft in der Öffnungs- und Schließrichtung gleich groß ist. Es wird also weniger Energie benötigt, was bei Batteriebetrieb eine wesentlich längere Betriebsdauer derselben beinhaltet. Da durch, daß im Gegensatz zum Stand der Technik ein Schrittmotor verwendet wird, ist eine digitale Steuerung des Öffnens/Schließens des Ventils besonders einfach zu bewirken. Erreicht das Ventil die geöffnete oder die geschlossene Stellung, so wird die Drehbewegung plötzlich durch Anschläge beendet, was zu einer erhöhten Stromaufnahme des Schrittmotors führt. Es ist daher durch einfaches Öffnen und Schließen des Ventils der Steuerung ohne weiteres möglich, genau festzustellen, wo diese Stellen angeordnet sind und wie viele Schritte sich der Schrittmotor von diesen Stellungen jeweils entfernt hat. Aufgrund dieser Tatsache stellt sich der Antriebsmechanismus nach der Installation automatisch ein. Es ist also nicht notwendig, daß Ventil und die Antriebseinrichtung mühevoll winkelmäßig aufeinander einzustellen. Gegenüber dem vorbekannten weist das erfindungsgemäße Ventil auch den Vorteil auf, aus weniger Einzelteilen und damit einfacher und kostengünstiger aufgebaut zu sein. Die erfindungsgemäße genaue Feststellung des geschlossenen Zustands durch erhöhte Stromaufnahme ist bei den bekannten Tellerventilen nicht möglich, da einerseits beim Schließen zum Überwinden der Federkraft eine höhere Stromaufnahme als beim Öffnen stattfindet und andererseits die Schließstellung aufgrund der Gummidichtung nicht exakt definiert ist. Das Erkennen des geöffneten Zustands ist wegen Fehlens eines entsprechenden Anschlags sogar überhaupt möglich.

Die Öffnungen des Drehschieberventils können im geöffneten Zustand wesentlich größer sein als bei den bekannten Ventilen mit Stößeln. Durch mehrmaliges Öffnen und Schließen des Drehschieberventils kann auch eine reinigende Durchspülung erreicht werden.

Vorteilhafterweise weist das Drehschieberventil zwei Keramikscheiben auf, von denen eine fest steht und die andere gedreht wird. Die Öffnungen in den Keramikscheiben können dabei zur maximalen Öffnung zur Überlappung gebracht werden. Ein allmähliches Schließen ist möglich, indem die drehbare Keramikscheibe gedreht wird, wodurch sich der Öffnungsquerschnitt kontinuierlich verringert, bis er null ist. Da die Öffnungsquerschnitte verhältnismäßig groß gemacht werden können, kann das erfindungsgemäße Ventil auch für Heiz- oder Kühlkörper unterschiedlicher Größen verwendet werden.

Eine vorteilhafte Ausführungsform zeichnet sich dadurch aus, daß der Motor batteriebetrieben ist. Dies ist wegen der verhältnismäßig kleinen Kraft möglich, die zum Öffnen bzw. Schließen des Ventils erforderlich ist.

Wenn die Anschläge metallische Anschläge sind, so sind die Stellungen völliger Öffnung und völliger Schließung besonders scharf definiert, was es der Elektronik erleichtert, diese Stellungen festzustellen.

Der Antrieb des Ventils erfolgt zweckmäßiger Weise über eine Schnecke mit Schneckenrad, das auf das Handbetätigungsrad aufsetzbar ist. Auf diese Weise entsteht nicht nur eine verhältnismäßig geringe Geräuschentwicklung beim Verstellen des Ventils. Vielmehr ist es auch möglich, das Ventil in sehr kleinen Winkelschritten zu öffnen oder zu schließen, so daß eine präzise Regelung/Steuerung möglich ist.

Die Antriebseinrichtung mit dem Schneckenrad kann auf das Handbetätigungsrad aufgesetzt werden. Ist die Antriebseinrichtung vom Handbetätigungsrad entfernt, d. h. vom Ventil abgenommen, so ist zweckmäßigerweise durch eine Halterung für das Schneckenrad dafür gesorgt, daß dasselbe aus dem Antriebsteil nicht herausfällt. Ist der Antriebsteil abgenommen, so kann das Ventil dann von Hand am Handbetätigungsrad eingestellt werden. Zu diesem Zweck ist das Handbetätigungsrad dann vorteilhafterweise mit einer Rändelung und einer Skala, z. B. mit den Zahlen 1 bis 5 versehen.

Zweckmäßigerweise ist der Antriebsteil mit einer Bajonettbefestigung am Ventil befestigt. Dies ermöglicht es, den Antriebsteil problemlos abzunehmen und wieder zu befestigen, wenn die Batterie ausgewechselt werden soll oder eine Temperatureinstellung oder Menüeinstellung erfolgen soll, die man nicht am schlecht zugänglichen Ort des Ventils, sondem an einem anderen Ort vornehmen möchte. Es bereitet dabei keine Probleme, den Antriebsteil wieder auf dem Ventil anzubringen, da die erwähnten Ungenauigkeiten (ungenaue achsiale Montage, geringe Ventilwege, Gummidichtung) wie bei dem bekannten Stößelventil nicht auftreten.

Vorteilhafterweise sind die Öffnungen der Keramikscheiben profiliert. Man könnte z. B. vorsehen, daß sich das Ventil nicht plötzlich bei Erreichen eines gewissen Winkels schlagartig schließt, sondern sich der entsprechende Schlitz mit sich veränderndem Winkel allmählich immer mehr verringert, indem er hier spitz oder z. B. halbmondförmig zusammenläuft. Dadurch ist eine besonders gute Regelung bei kleinen Durchflußmengen möglich. Außerdem ergibt sich eine vorteilhafte Geräuschminimierung.

Zweckmäßigerweise weist das Ventil eine Plombierung gegen unbefugtes Betätigen während der Rohbautätigkeiten auf. Diese Plombierung wird dann entfernt, wenn Heizen bzw. Kühlen ermöglicht werden soll. Hierzu wird erst der Ventilkopf abgenommen und das Restventil manuell geschlossen oder geöffnet und in einer dieser Stellungen plombiert. Insbesondere das Festsetzen und Plombieren in der geschlossenen Stellung während des Rohbaus besonders sinnvoll.

Es kommt zwar auf die Winkelstellung zwischen Antriebsteil und Ventil aus technischen Gründen nicht an, da die Steuerung selbsttätig die Stellungen maximaler Öffnung und maximaler Schließung findet. Aus ästhetischen Gründen ist es aber unerwünscht, wenn der Antriebsteil schräg herunterhängt. Zu diesem Zweck ist zweckmäßigerweise vorgesehen, daß das Ventil eine Verdrehsicherung für den Antriebsteil relativ zum Ventil aufweist.

In einem besonders bevorzugten Weiterentwicklung der Erfindung ist außerdem ein Hall-Sensor vorgesehen, der feststellt, ob der Motor dreht oder nicht dreht oder zusätzlich oder alternativ nur die Endanschläge überprüft. Dazu ist ein sich bewegendes Element des Motors, insbesondere eine Welle, mit einem Magneten versehen, so daß eine Drehbewegung des Motors eine Änderung des Magnetfeldes bewirkt und der Hall-Sensor dies detektieren kann, insbesondere ob eine Drehung erfolgt oder nicht. Auf diese Weise kann bevorzugt die tatsächliche Ausführung eines gegebenen Steuerkommandos überwacht und sichergestellt werden. Das Erreichen eines Endanschlages kann dadurch festgestellt werden daß eine Motordrehung nicht mehr erfolgt. Im Übrigen wird dieser Zustand auch vergleichsweise zuverlässig durch das Ansteigen des Motorstroms festgestellt.

Zusammenfassend kann also festgestellt werden, daß durch das erfindungsgemäße Ventil ebenfalls die elektronischen Möglich- keiten der Steuerung und Regelung gegeben sind, wie dies beim Stand der Technik möglich ist. Der besondere Vorteil besteht aber darin, daß eine genauere Steuerung/Regelung möglich ist, da die Schließstellung (und Öffnungsstellung) elektronisch nach der Montage genau feststellbar ist, während bei den Stößelventilen die Schließstellung aufgrund von Erwärmung des Ventils und der Gummidichtung sich ändern kann und außerdem die Betätigungseinrichtung nicht mit dem richtigen Drehmoment aufgeschraubt sein kann, so daß die Betätigungseinrichtung von einem falschen Wert für die Schließstellung ausgeht.

Die Erfindung wird im folgenden anhand einer vorteilhaften Ausführungsform unter Bezugnahme auf die beigefügten Zeichnungen beispielsweise beschrieben. Es zeigen:
- Figur 1: im Querschnitt ein erfindungsgemäßes Ventil;
- Figur 2: das Ventil der Erfindung in Draufsicht
- Figur 3: einen Schnitt entlang der Linie A-A in Figur 1; und
- Figur 4 und 5: Öffnungsprofile der Keramikscheiben des Drehschieberventils.

Die Beschreibung nimmt dabei auf ein Heizkörperventil Bezug, obwohl das Ventil, wenn es im Zusammenhang mit Kühlung verwendet wird, im wesentlichen den gleichen Aufbau hat wie ein Heizkörperventil. Es ist höchstens noch zusätzlich ein Temperaturfühler am Kühlkörper vorgesehen, um das Auftreten von Tauwasser zu verhindern.

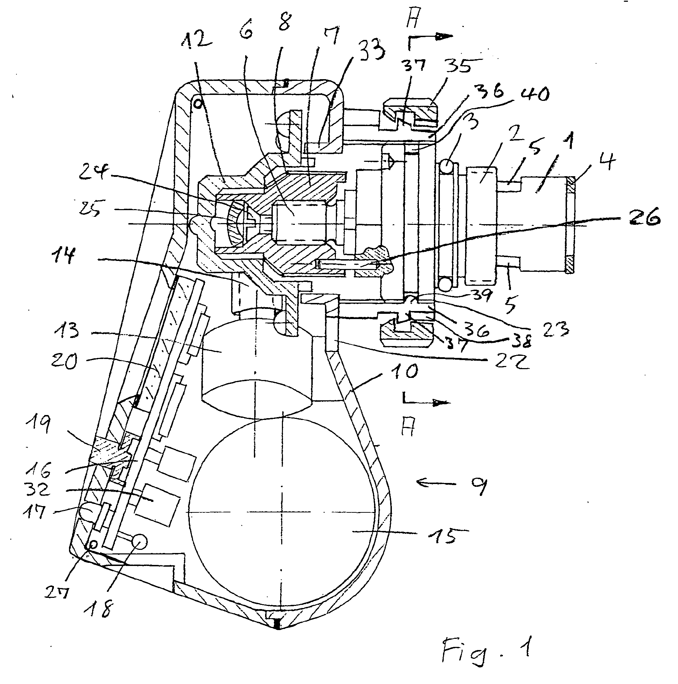

In Figur 1 ist ein Heizventil 1 gezeigt, das mit einem Gewinde 2 in die Ventilöffnung eines Heizkörpers eingeschraubt wird und dabei durch die Dichtung 3 abgedichtet wird. Gegen den Ventilsitz dichtet das Ventil 1 mit einer Dichtung 4 ab. Durch die mittige Öffnung dieser Dichtung 4 tritt die Heizflüssigkeit in das Ventil 1 ein und tritt dann aus den Öffnungen 5 wieder aus. Die Durchflußmenge wird dabei durch Drehung von zwei Keramikscheiben gesteuert, die innerhalb des Ventils 1 angeordnet sind, und von denen eine mit Hilfe der Spindel 6 verdreht werden kann, auf die ein Handbetätigungsrad 7 aufgesetzt ist. Das Handbetätigungsrad 7 ist dabei mit einer Skaleneinteilung 8, z. B. mit den Zahlen 1 bis 5 versehen. Mit diesem Handbetätigungsrad 7 kann die Temperatur von Hand eingestellt werden.

Für die automatische Steuerung/Regelung ist nun ein Antriebsteil 9 vorgesehen, der ein Gehäuse 10 aufweist, das mit Hilfe einer Bajonettverriegelung am Ventil 1 befestigt werden kann. Diese weist einen Verriegelungsring 35 auf, der auf am Gehäuse befestigter Federzungen 36 aufgesetzt ist und Vorsprünge 37 dieser Federzungen 36 hintergreift. Der Verriegelungsring 35 weist der in gleichen Winkelabständen, einen Winkel von 60° einnehmende Bajonettnocken 38 auf, die die Federzungen 36 nach innen drücken und dadurch Vorsprünge 39 derselben in eine Ringnut 40 drücken, die am Ventil 1 angeordnet ist.

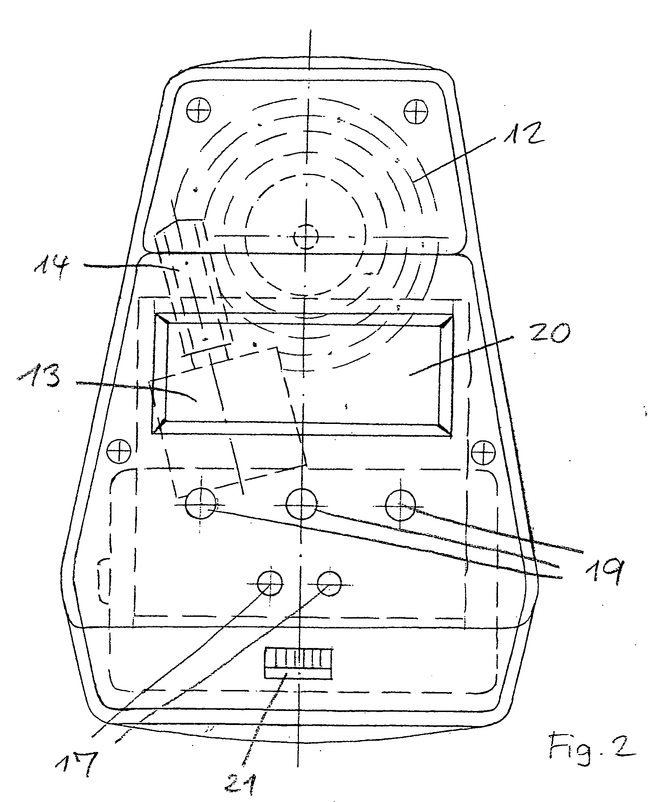

Das Handbetätigungsrad 7 wird dabei von einem Schneckenrad 12 umgriffen und rastet auf demselben unverdrehbar ein. Durch Vorsprünge 33 wird verhindert, daß das Schneckenrad 12 aus dem Gehäuse 10 herausfallen kann, wenn der Antriebsteil 9 vom Ventil 1 abgehoben ist. Das Schneckenrad 12 wird durch einen Motor 13 über eine Schnecke 14 angetrieben, wobei der Motor 13 durch eine Batterie 15 gespeist wird. Bei 16 ist eine Schaltungsplatine gezeigt, die der elektronischen Steuerung des Motors 13 dient und ein IR-Diodenpaar 17 zur Programmierung, einen Raumtemperaturfühler 18, Tasten 19 zur Programmierung, eine LCD-Anzeige 20, eine Strommaßeinrichtung 32 und eine Funkantenne 27 aufweist. Diese Teile sind zum Teil auch in Figur 2 gezeigt. Dort ist zusätzlich noch eine Luftöffnung 21 für den Raumtemperaturfühler gezeigt, der eine zweite Öffnung 22 entspricht, die in Figur 1 gezeigt ist, damit die Raumluft den Temperaturfühler 18 überstreichen kann.

Bei 23 sind Längsnuten vorgesehen, die am Umfang der Befestigungsstelle des Antriebsteils 9 am Ventil 1 und am Antriebsteil 9 vorgesehen sind und als Verdrehsicherung dienen. Vorzugsweise sind 90 solcher Nuten am Umfang vorgesehen, wodurch die Position bis auf einen Winkel von 4° festgelegt werden kann.

Um im Rohbauzustand des unberechtigte Öffnen des Ventils zu verhindern, ist das Handbetätigungsrad 7 auf die Ventilspindel 6 mit Hilfe einer Schraube 24 aufgeschraubt, die mit einer Plombierung 25 gesichert ist. Das Handbetätigungsrad 7 ist dabei gegenüber dem Ventil 1 durch einen Stift 26 gegen Verdrehung gesichert. Nach Beendigung des Rohbaus, und wenn normal geheizt werden soll, wird die Plombierung 25 entfernt, die Schraube 24 gelöst, das Handbetätigungsrad 7 vom Ventil 1 abgezogen und der Sicherungsstift 26, der das Ventil im geschlossenen Zustand blockiert hatte, entfernt. Nachdem das Handbetätigungsrad 7 wieder aufgesetzt und mit der Schraube 24 befestigt ist, kann das Ventil dann normal betätigt werden.

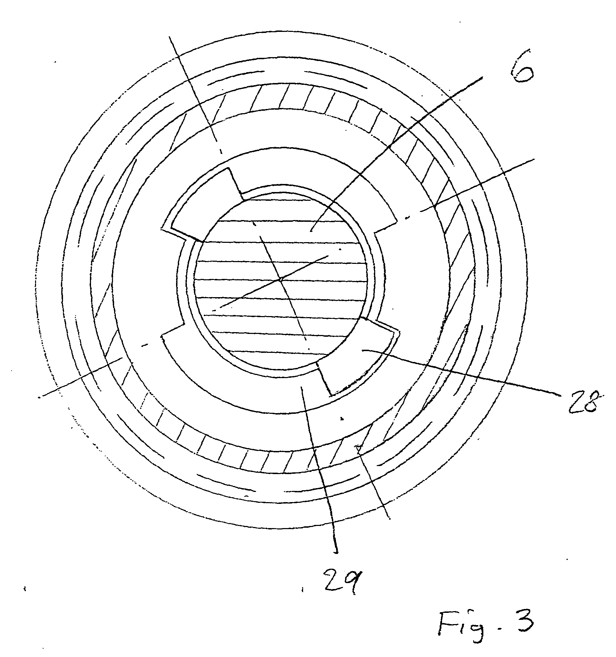

Wie dies in Figur 3 gezeigt ist, sind auf der Ventilspindel 6 zwei metallische Anschläge 28 vorgesehen, die sich in Schlitzen 29 bewegen können. Die gezeigten Anschläge begrenzen einen Winkelbereich von 90°. Es ist daher auch ein anderer Winkelbereich möglich, z. B. bis zu 180°. Diese Anschläge definieren die Stellungen maximaler Öffnung und völliger Schließung sehr genau. Dreht sich der Schrittmotors 13 in einer Richtung und wird die völlig geöffnete oder völlig geschlossene Stellung erreicht, so wächst der Strom an, was die Elektronik erkennt und damit die maximale Öffnungsstellung und maximale Schließstellung feststellt. Zwischenstellungen können dann durch eine von der Elektronik bestimmte Zahl von Schritten erreicht werden. Zusätzlich wird mit einem Hall-Sensor die Ausführung der Drehung überwacht.

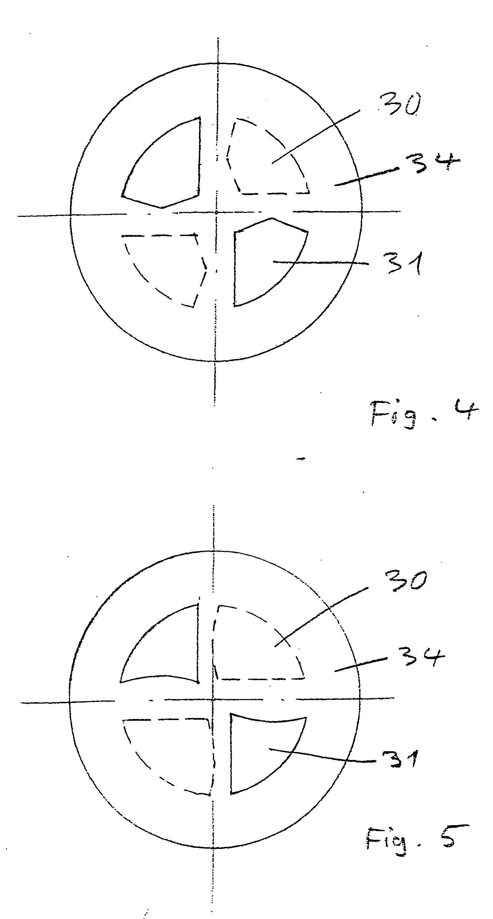

Wie dies bereits erwähnt wurde, weist das Ventil 1 zwei in Figur 1 nicht gezeigte Keramikscheiben auf, von denen eine fest steht und von denen die andere mit Hilfe der Ventilspindel 6 gedreht werden kann. Diese Keramikscheiben 34 sind in den Figuren 4 und 5 in zwei verschiedenen Ausführungsformen gezeigt, und zwar in der geschlossenen Stellung, wobei die jeweils hintere Scheibe mit ihren Öffnungen 30 gestrichelt dargestellt ist. Durch Relativdrehung der beiden Scheiben können dann die Öffnungen 30 der hinteren Scheibe mit den Öffnungen der vorderen Scheibe 34 ganz oder teilweise in Dekkung gebracht werden, wodurch sich das Ventil öffnet. Diese Öffnung geschieht nicht schlagartig, da die Öffnungen 30, 31 profiliert sind.

Wenn in der obigen Beschreibung und in den beigefügten Ansprüchen von einem "Handbetätigungsrad" die Rede ist, so muß dieses nicht die Form eines üblichen Rades haben. Es wird darunter vielmehr ein im wesentlichen rotationssymmetrisches Bedienungselement verstanden, das nicht unbedingt ein von der Ventilspindel 6 gesondertes Element sein muß. Auch die Ventilspindel 6 könnte ein solches "Handbetätigungsrad" sein, wozu sie dann zweckmäßigerweise mit einer Rändelung versehen wäre.

## Patentansprüche

1. Ventil mit einem demontierbaren elektronisch gesteuer ten elektromotorischem Antrieb für fluidbetriebene Heiz- und Kühlkörper, das bei abgenommenem Antriebsteil mit einem Handbetätigungsrad oder manuell einstellbar ist, auf das bei aufgesetztem Antriebsteil der Antrieb wirkt, **dadurch gekennzeichnet, daß** das Ventil (1) als Drehschieberventil mit durch Anschläge (28) definierten Stellungen völliger Öffnung und völliger Schließung ausgebildet ist, der Antrieb einen Schrittmotor (13) aufweist und die Steuerung eine Messeinrichtung für den Motorstrom aufweist.

2. Ventil nach Anspruch 1, **dadurch gekennzeichnet, daß** das Drehschieberventil zwei Keramikscheiben (34) aufweist.

3. Ventil nach Anspruch 1 oder 2, **dadurch gekennzeichnet, dass** der Motor (13) batteriebetrieben (15) ist.

4. Ventil nach einem der Ansprüche 1-3, **dadurch gekennzeichnet, daß** die Anschläge (28) metallische Anschläge sind.

5. Ventil nach einem der Ansprüche 1-3, **dadurch gekennzeichnet, daß** der Antrieb des Ventil über eine Schnecke (14) mit Schneckenrad (12) erfolgt, das auf das Handbetätigungsrad (7) aufsetzbar ist.

6. Ventil nach Anspruch 5, **dadurch gekennzeichnet, daß** es eine Halterung (33) für das Schneckenrad (12) aufweist.

7. Ventil nach einem der Ansprüche 1-6, **dadurch gekennzeichnet, daß** es eine Bajonettbefestigung (35-40) für den Antriebsteil (9) am Ventil aufweist.

8. Ventil nach einem der Ansprüche 2-7, **dadurch gekennzeichnet, daß** die Öffnungen (30, 31) der Keramikscheiben profiliert sind.

9. Ventil nach einem der Ansprüche 1-8, **dadurch gekennzeichnet, daß** das Handbetätigungsrad (7) mit einer Rändelung und einer Skala (8) versehen ist.

10. Ventil nach einem der Ansprüche 1-9, **dadurch gekennzeichnet, daß** es eine Plombierung (25) gegen unbefugtes Betätigen während der Rohbautätigkeiten aufweist.

11. Ventil nach einem der Ansprüche 1-10, **dadurch gekennzeichnet, daß** es eine Verdrehsicherung (23) für den Antriebsteil relativ zum Ventil aufweist.

12. Ventil nach einem der Ansprüche 1-11, **dadurch gekennzeichnet, daß** das Ventil einen Hall-Sensor aufweist, der zur Detektion einer Bewegung des Schrittmotors ausgelegt ist.
